(19) Europäisches Patentamt
European Patent Office
Office européen des brevets

(11) Veröffentlichungsnummer : **0 324 173 B1**

(12) # EUROPÄISCHE PATENTSCHRIFT

(45) Veröffentlichungstag der Patentschrift : **28.08.91 Patentblatt 91/35**

(51) Int. Cl.[5] : **C08F 36/18,** C08F 2/26

(21) Anmeldenummer : **88121823.4**

(22) Anmeldetag : **29.12.88**

(54) **Verfahren zur Herstellung schwefelmodifizierten Polychloroprens.**

(30) Priorität : **08.01.88 DE 3800263**

(43) Veröffentlichungstag der Anmeldung : **19.07.89 Patentblatt 89/29**

(45) Bekanntmachung des Hinweises auf die Patenterteilung : **28.08.91 Patentblatt 91/35**

(84) Benannte Vertragsstaaten : **DE FR GB**

(56) Entgegenhaltungen :
**EP-A- 0 011 029**
**DE-A- 3 507 825**
**US-A- 4 678 848**

(73) Patentinhaber : **BAYER AG**
**W-5090 Leverkusen 1 Bayerwerk (DE)**

(72) Erfinder : **Obrecht, Werner, Dr.**
**Holderbergerstrasse 108**
**W-4130 Moers (DE)**
Erfinder : **Wendling, Peter**
**Franz-Marc-Strasse 9**
**W-5090 Leverkusen (DE)**
Erfinder : **Musch, Rüdiger, Dr.**
**Altenberger-Dom-Strasse 169**
**W-5060 Bergisch-Gladbach 2 (DE)**
Erfinder : **Müller, Eberhard, Dr.**
**Pfauenstrasse 19**
**W-4047 Dormagen 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

**Beschreibung**

Die Erfindung betrifft ein Verfahren zur Herstellung von löslichem, schwefelmodifiziertem Polychloropren durch Emulsionspolymerisation nach der Variante der "Direktpeptisation" in Gegenwart unmodifizierter Harzsäure.

Schwefelmodifiziertes Polychloropren besitzt eine Reihe technisch interessanter Eigenschaften und hat deshalb ein breites Anwendungsgebiet gefunden. Charakteristisch für schwefelmodifiziertes Polychloropren ist die Möglichkeit der normalen Vulkanisation mit Metalloxiden, wie Zinkoxid und/oder Magnesiumoxid, ohne Verwendung von Vulkanisationsbeschleunigern, wie z.B. Ethylenthioharnstoff oder 3-Methylthiazolidin-thion-2.

Die Vulkanisate schwefelmodifizierten Polychloroprens zeichnen sich durch hohe Festigkeit und Weiterreißfestigkeit bei relativ hohen Spannungswerten aus. Besonders vorteilhaft ist die hohe dynamische Belastbarkeit bei gleichzeitig hohen Spannungswerten. Deswegen verwendet man schwefelmodifiziertes Polychloropren vor allem für die Herstellung dynamisch belasteter Artikel, beispielsweise Keilriemen, Zahnriemen und Achsmanschetten.

Die Polychloroprenherstellung ist seit langem bekannt ; sie erfolgt durch Emulsionspolymerisation im alkalischen wäßrigen Medium ; vgl. "Ullmanns Encyclopädie der Technischen Chemie", Band 9, S. 366 ff, Verlag Urban und Schwarzenberg, München-Berlin 1957 ; "Encyclopedia of Polymer Science and Technology", Vol. 3, S. 705 bis 730, John Wiley, New York 1965 ; "Methoden der Organischen Chemie" (Houben-Weyl) XIV/1, 738 f, Georg Thieme Verlag, Stuttgart 1961.

Durch Copolymerisation des mitverwendeten Schwefels entstehen Blockcopolymerisate mit Chloropren- und Schwefelsegmenten unterschiedlicher Länge. Dieses primär entstehende Copolymerisat ist mindestens teilweise vernetzt und kann deshalb in organischen Lösungsmitteln, wie Toluol, ganz oder teilweise unlöslich sein. Durch Spaltung der Schwefelsegmente läßt sich das Produkt bis zur gewünschten Viskosität abbauen ("Peptisation") und ist dann wieder Toluol-löslich. Bei den meisten Verfahren wird die Peptisation nach Ende der Polymerisation durchgeführt ; doch auch die Peptisation während der Polymerisation unter Vermeidung eines nachgeschalteten separaten Verfahrensschrittes nach Abschluß der Polymerisation ist schon empfohlen worden ("Direktpeptisation", DE-OS 3507825).

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium- und Ammoniumsalze von langkettigen Fettsäuren, Kolophonium und Kolophonium-derivaten (d.h. unmodifizierten und modifizierten Harzsäuren), höhermolekulare Alkoholsulfate, Arylsulfonsäuren, Formaldehydkondensate von Arylsulfonsäuren, nichtionische Emulgatoren auf Polyethylenoxid- und Polypropylenoxidbasis sowie emulgierend wirkende Polymere wie Polyvinylalkohol (DE-OS 2307811, 2426012, 2514666, 2527320, 2755074, 3246748, DE-AS 1271405, 1301502, US-PS 2234215, JP-A-60-31510 (= 58-136824 v. 28.7.1983)).

Unmodifizierte Harzsäuren sind aus Tallöl, Kiefernbalsam und Wurzelharz gewonnene tricyclische Diterpencarbonsäuren. Unter modifizierten Harzsäuren versteht man disproportionierte und/oder teilhydrierte und/oder polymerisierte Harzsäuren ; s. W. Barendrecht, L.T. Lees in Ullmanns Encyclopädie der Technischen Chemie, 4. Aufl., Bd. 12, 528-538, Verlag Chemie, Weinheim — New York 1976. Unmodifizierte Harzsäuren reduzieren im allgemeinen die Polymerisationsgeschwindigkeit bei der Kautschuksynthese (Plaste und Kautschuk 31, Heft 3/1984, 90 f).

Überraschenderweise wurde nun gefunden, daß die Kombination zweier Verfahrensparameter, die als anscheinend voneinander unabhängig betrachtet worden sind — nämlich die Verwendung unmodifizierter Harzsäuren einerseits und die Variante der Direktpeptisation andererseits — einen synergistischen Effekt betreffend das Verhältnis von Elastizität zu Viskosität erzielen. Dieses Ergebnis ist völlig unerwartet und kann bislang nicht erklärt werden.

Gegenstand der Erfindung ist ein Verfahren zur Herstellung von toluollöslichem vulkanisierbarem Polychloropren durch Emulsionspolymerisation von Chloropren und, bezogen auf eingesetztes polymerisierbares Monomer, 0 bis 30, vorzugsweise 0 bis 20, Gew.-% mit Chloropren copolymerisierbaren ethylenisch ungesättigten anderen Monomeren in Gegenwart unmodifizierter Harzsäure und in Gegenwart von 0,05 bis 1,5, vorzugsweise 0,1 bis 1, Gew.-%, bezogen auf eingesetztes polymerisierbares Monomer, elementarem Schwefel oder der äquivalenten Menge Schwefelspender nach der Variante der Direktpeptisation, dadurch gekennzeichnet, daß man die Polymerisation im alkalischen Medium in Gegenwart von

(1) — jeweils bezogen auf 100 g eingesetztes polymerisierbares Monomer — als Peptisationsmittel

(1a) $2 \cdot 10^{-4}$ bis $4{,}4 \cdot 10^{-2}$, vorzugsweise $4 \cdot 10^{-4}$ bis $2 \cdot 10^{-2}$, Mol Dithiocarbamat mit dem Anion

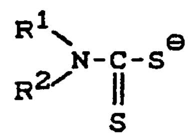 und/oder

(1b) $3 \cdot 10^{-4}$ bis $6.4 \cdot 10^{-2}$, vorzugsweise $6 \cdot 10^{-4}$ bis $3 \cdot 10^{-2}$, Mol Xanthogenat mit dem Anion

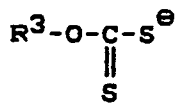

worin
$R^1$, $R^2$, $R^3$ $C_1$-$C_{24}$-Alkyl, $C_5$-$C_{16}$-Cycloalkyl oder $C_6$-$C_{18}$-Aryl, die bis zu 3 Heteroatome enthalten können, und darüber hinaus
$R^1$ und $R^2$ zusammen $C_4$-$C_5$-Alkylen bedeuten,
und
(2) wasserlöslichem Salz von tricyclischer Diterpencarbonsäure mit mindestens zwei konjugierten C=C-Doppelbindungen pro Molekül in einer Menge entsprechend $10^{-3}$ bis $10^{-1}$, vorzugsweise $6 \cdot 10^{-3}$ bis $6 \cdot 10^{-2}$, C=C-Doppelbindungen pro 100 g eingesetztem polymerisierbarem Monomer durchführt.

"Toluol-löslich" im Sinne der Erfindung bedeutet, daß bei 25°C nicht mehr als 5 Gew.-%, bezogen auf Polymereinwaage, unlöslicher Rückstand verbleiben (150 mg Probe in 20 ml Toluol 16 Stunden stehen lassen, danach 2 Stunden schütteln, zentrifugieren, Trocknen bei 70°C bis zur Gewichtskonstanz).

Das erfindungsgemäß erhältliche schwefelmodifizierte Polychloropren besitzt im allgemeinen mindestens eine Viskosität von 30 000 cP (Brookfield-Viskosimeter, 21°C) und eine Mooney-Viskosität (nach DIN 53 523) von bis zu 140 ME (ML 1 + 4 ; 100°C), vorzugsweise eine Mooney-Viskosität von 20 bis 120 ME.

Bevorzugte, mit Chloropren copolymerisierbare, ethylenisch ungesättigte "andere Monomere" umfassen Verbindungen mit 3 bis 12 C-Atomen und 1 oder 2 copolymerisierbaren C=C-Doppelbindungen pro Molekül. Beispiele bevorzugter "anderer Monomerer" sind Styrol, 2,3-Dichlorbutadien, 1-Chlorbutadien, Butadien, Isopren, Acrylsäure, Methacrylsäure, Acrylnitril und Methacrylnitril. Wichtigstes Comonomer ist 2,3-Dichlorbutadien.

Schwefel, der im Sinne der Erfindung nicht unter die "anderen Monomeren" fällt, wird vorzugsweise in wäßriger Dispersion in die Reaktion eingebracht. Geeignete "Schwefelspender" sind im Prinzip von der Vulkanisation her bekannt; bevorzugte Schwefelspender enthalten Schwefelsegmente mit mindestens 3 zusammenhängenden Schwefelatomen pro Molekül. Beispiele für solche Schwefelspender sind Tetraalkylthiurampolysulfide.

Die Peptisationsmittel (1) werden dem Polymerisationsansatz vorzugsweise vor Reaktionsbeginn zugesetzt.

Vorzugsweise stehen $R^1$ und $R^2$ unabhängig voneinander für $C_1$-$C_4$-Alkyl und $R^3$ für $C_1$-$C_8$-Alkyl oder 2,2-(2,4-Dioxapentamethylen)-n-butyl der Formel

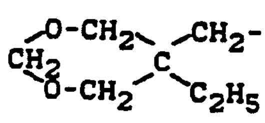

Bevorzugte Heteroatome für die Substituenten $R^1$ bis $R^3$ sind Stickstoff und Sauerstoff.

Bevorzugte Kationen für die Verbindungen (1a) und (1b) sind Alkalimetallionen, insbesondere Natrium- und Kaliumionen, sowie Ammoniumionen.

Die erfindungsgemäß einzusetzenden tricyclischen Diterpencarbonsäuren können in Form der rohen Harzsäuren verwendet werden, sofern diese frei von destillierbaren Bestandteilen des Terpentinöls sind, die sich als inhibierend erwiesen haben. Wenn die tricyclischen Diterpencarbonsäuren selbst leicht zugänglich sind, können sie auch in reiner Form eingesetzt werden. Geeignete tricyclische Diterpencarbonsäuren umfassen beispielsweise Abietinsäure, Palustrinsäure, Neoabietinsäure und Lävopimarsäure.

Die tricyclischen konjugiert ungesättigten Diterpencarbonsäuren (2) können aus einem Gemisch von Harzsäuren nach Art und Menge durch Gaschromatographie bestimmt werden ; beispielsweise gemäß oder analog J. Amer. Oil Chem. Soc. 54, 289 (1977).

Die anspruchsgemäßen Mengen entsprechen 0,15 bis 15, vorzugsweise 0.9 bis 9, Gew.-% (berechnet als freie Säure), tricyclische Diterpencarbonsäure pro 100 g polymerisierbarem Monomer.

Die im Stand der Technik mitunter empfohlene Praxis, in einzelnen Fällen Emulgatormischungen zu verwenden, ist auch hier anwendbar. So können neben den unmodifizierten tricyclischen Diterpencarbonsäuren auch andere Emulgatoren, wie anionische, kationische, amphotere und nichtionische Emulgatoren, beispielsweise auch modifizierte Harzsäuren, mitverwendet werden. Als besonders vorteilhaft hat sich die Mitverwendung von Sulfaten oder Sulfonaten, beispielsweise Bis-(naphthalinsulfonat)-methan, in Mengen erwiesen, die eine vorzeitige Coagulation bei der Sensibilisierung des Latex durch Ansäuren verhindern.

Die erfindungsgemäß zu verwendenden Emulgatoren können — vorzugsweise als freie Säure — den Monomeren zugesetzt oder als Säure oder in Form ihrer Salze in der wäßrigen Phase gelöst werden. Bevorzugte Aktivatoren sind wasserlösliche Salze der Peroxodischwefelsäure, wie Kaliumperoxodisulfat, in Mengen von 0,1 bis 3, vorzugsweise 0,2 bis 2,5 mMol pro 100 g eingesetztes polymerisierbares Monomer.

Als Coaktivator kann beispielsweise Natriumanthrachinon-β-sulfonat in Mengen von bis zu 0,2, vorzugsweise 0,005 bis 0,1, Gew.-%, bezogen auf eingesetztes polymerisierbares Monomer, eingesetzt werden.

Die Emulsionspolymerisation wird in der Regel bei pH-Werten von 3 bis 14, vorzugsweise 10 bis 13, durchgeführt.

Die Polymerisation kann bei Temperaturen von 0 bis 70, vorzugsweise 5 bis 50, °C durchgeführt werden. Nach einem Umsatz von 50 bis 95, vorzugsweise 60 bis 90, Gew.-% kann die Polymerisation durch Zusatz von Abstoppmitteln beendet werden.

Die Entfernung von Restmonomer und die Aufarbeitung können wie üblich erfolgen.

Das erfindungsgemäße Verfahren kann kontinuierlich oder diskontinuierlich durchgeführt werden.

Zur Verbesserung der Lagerstabilität können Stabilisatoren, wie sterisch gehinderte Phenole, Amine, Phosphite, Xanthogendisulfide oder Thiuramdisulfide, zugesetzt werden. Bevorzugter Stabilisator ist Tetraethylthiuramdisulfid in Mengen bis zu 6 Gew.-%, bezogen auf eingesetztes polymerisierbares Monomer.

Die erfindungsgemäß hergestellten schwefelmodifizierten Polychloroprene lassen sich in Gegenwart von Vulkanisationsbeschleunigern aus der Klasse der Zink- und/oder Magnesiumoxide, gegebenenfalls nach Zusatz von Füllstoffen und gegebenenfalls weiteren Zusätzen, bei erhöhter Temperatur, vorzugsweise bei Temperaturen von 100 bis 250°C, vulkanisieren.

Die in den nachfolgenden Beispielen angegebenen Teile sind Gewichtsteile ; Prozentangaben bedeuten Gewichtsprozente.

## Beispiele

Die erfindungsgemäßen Beispiele basieren auf diskontinuierlich durchgeführten Versuchen folgender Grundrezeptur :

| | [Teile] |
|---|---|
| Chloropren und Comonomer | 100 |
| Entsalztes Wasser | 120 |
| Tricyclische Diterpencarbonsäure | s. Text und Tabellen |
| Na-Salz des Kondensationsproduktes aus 2 Mol Naphthalinsulfonsäure und 1 Mol Formaldehyd | 0,7 |
| Kaliumhydroxid | 1,1 |
| Na-Salz der Anthrachinon-β-sulfonsäure | 0,03 |
| Kaliumperoxodisulfat | s. Tabellen |
| Peptisationsmittel | s. Tabellen |

Beispiel 1a

In einem 20 1-Kolben wurde die wäßrige Phase bestehend aus 120 Teilen entsalztem Wasser, 3,25 Teilen unmodifizierter Harzsäure auf Wurzelharzbasis, 1,1 Teilen Kaliumhydroxid, 0,7 Teilen des Na-Salzes des Kondensationsproduktes aus Naphthalinsulfonsäure und Formaldehyd und 0,03 Teilen Na-Salz der Anthrachinon-β-sulfonsäure vorgelegt, mit Stickstoff gespült und auf 40°C aufgeheizt. Dann wurden 100 Teile mit Stickstoff gespültes Chloropren zugegeben. Nach Einstellung einer Temperatur von 40°C wurden 0,3 Teile Schwefel (50%ige wäßrige Dispersion) zugegeben. Dann wurden 0,8 Teile Na-Diethyldithiocarbamat (30%ige wäßrige Lösung) zugesetzt.

Die Aktivierung erfolgte mit 0,03 Teilen $K_2S_2O_8$ in Form einer mit Stickstoff gespülten 4%igen wäßrigen $K_2S_2O_8$-Lösung. Während des Versuches wurden $2,25 \cdot 10^{-3}$ Teile $K_2S_2O_8$ pro Minute in Form dieser wäßrigen und mit Stickstoff gespülten Persulfatlösung zudosiert.

Der Verlauf der Polymerisation wurde gravimetrisch an gezogenen Proben verfolgt. Bei einem Monomerumsatz von 65% wurde mit 0,03 Teilen, bezogen auf Latex, einer 2,5%igen Lösung von Diethylhydroxylamin abgestoppt und der Latex mit 1,0 Teil Tetraethylthiuramdisulfid (TETD) versetzt (toluolische Emulsion).

Der Latex wurde auf ca. 500 ppm Restchloropren (bezogen auf Latex) entgast, der entgaste Latex mit 20%iger Essigsäure auf pH 6 gestellt, das Polymere durch Gefrier koagulation isoliert, mit entsalztem Wasser gewaschen und bis zu einer Restfeuchte von ≤ 0,5% getrocknet. Das Polymere wies eine Mooney-Viskosität (ML 1 + 4, 100°C) von 51 ME auf.

Beispiel 1b

Die Herstellung erfolgte analog Beispiel 1a mit dem Unterschied, daß anstelle von 0,8 Teilen Na-Diethyldithiocarbamat 0,9 Teile Na-Dibutyldithiocarbamat eingesetzt wurden. Der Monomerumsatz betrug 66%. Das Polymere wies eine Mooney-Viskosität (ML 1 + 4, 100°C) von 47 ME auf.

Beispiel 1c

Die Herstellung erfolgte analog Beispiel 1a mit dem Unterschied, daß anstelle von 0,8 Teilen Na-Diethyldithiocarbamat 1,2 Teile Na-Dicyclohexyldithiocarbamat und anstelle einer Harzsäure auf Wurzelharzbasis die gleiche Menge einer unmodifizierten Harzsäure auf Tallölbasis verwendet wurden. Der Monomerumsatz betrug 70%. Das Polymere wies eine Mooney-Viskosität (ML 1 + 4, 100°C) von 52 ME auf.

Beispiel 1d

Die Herstellung erfolgte analog Beispiel 1a mit dem Unterschied, daß anstelle von 0,8 Teilen Na-Diethyldithiocarbamat 1,5 Teile K-Ethylxanthogenat und anstelle einer Harzsäure auf Wurzelharzbasis 3,25 Teile einer unmodifizierten Harzsäure auf Tallölbasis eingesetzt wurden. Der Monomerumsatz betrug 70%. Das Polymere wies eine Mooney-Viskosität (ML 1 + 4, 100°C) von 40 ME auf.

Beispiel 1e

Die Herstellung erfolgte analog Beispiele 1a mit dem Unterschied, daß anstelle von 0,8 Teilen Na-Diethyldithiocarbamat 2,5 Teile Na-2,2-(2,4-dioxapentamethylen)-n-butylxanthogenat und anstelle einer Harzsäure auf Wurzelharzbasis 3,25 Teile einer unmodifizierten Harzsäure auf Kiefernbalsambasis eingesetzt wurden. Der Monomerumsatz betrug 64%. Das Polymere wies eine Mooney-Viskosität (ML 1 + 4, 100°C) von 55 ME auf.

Die wesentlichen Rezepturunterschiede und die erhaltenen Viskositäten werden in der folgenden Tabelle 1 aufgeführt (Beispiele 1a-1e).

<u>Tabelle 1:</u> Herstellungsbedingungen und Viskositäten für die Beispiele 1a - 1e

| | unmodifizierte Harzsäure auf Basis von | Peptisationsmittel Art | Menge [Teile] | $K_2S_2O_8$ [Teile] | Monomer-umsatz [%] | TETD-Nachsatz [Teile] | ML 1+4 [ME] |
|---|---|---|---|---|---|---|---|
| Bsp.1a | Wurzelharz | Na-Diethyl-dithiocarbamat | 0,8 | 0,30 | 65 | 1,0 | 51 |
| Bsp.1b | Wurzelharz | Na-Dibutyl-dithiocarbamat | 0,9 | 0,15 | 66 | 1,0 | 47 |
| Bsp.1c | Tallöl | Na-Dicyclohexyl-dithiocarbamat | 1,2 | 0,25 | 70 | 1,0 | 52 |
| Bsp.1d | Tallöl | K-Ethyl-xanthogenat | 1,5 | 0,15 | 70 | 1,0 | 40 |
| Bsp.1e | Kiefernbalsam | Na-2,2-(2,4-dioxa-pentamethylen)-n-butylxanthogenat | 2,5 | 0,30 | 64 | 2,0 | 55 |

Beispiel 2

Die Herstellung erfolgte analog Beispiel 1a. Im Unterschied zu Beispiel 1a erfolgte die Aktivierung mit 0,005 Teilen $K_2S_2O_8$. Während des Versuches wurden $1,0 \cdot 10^{-3}$ Teile $K_2S_2O_8$ pro Minute zudosiert. Es wurden 0,85 Teile Na-Dibutyldithiocarbamat und 3,25 Teile einer unmodifizierten Harzsäure auf Tallölbasis eingesetzt. Der Monomerumsatz betrug 64%. Die verwendete TETD-Menge betrug 1,2 Teile. Das Polymere wies eine Mooney-Viskosität (ML 1 + 4, 100°C) von 42 ME auf.

Beispiel 3

Die Herstellung erfolgte analog Beispiel 1a, während die Aktivierung wie in Beispiel 2 erfolgte. Im Unterschied zu Beispiel 1a wurden 90 Teile Chloropren, 10 Teile 2,3-Dichlorbutadien, 1,2 Teile Na-Dibutyldithiocarbamat und 3,25 Teile einer unmodifizierten Harzsäure auf Tallölbasis eingesetzt und die Polymerisation bei einer Temperatur von 25°C durchgeführt. Der Monomerumsatz betrug 67%. Die verwendete TETD-Menge betrug 1,5 Teile. Das Polymere wies eine Mooney-Viskosität (ML 1 + 4, 100°C) von 41 ME auf.

Beispiel 4

Die Herstellung erfolgte analog Beispiel 1a, während die Aktivierung wie in Beispiele 2 erfolgte. Im Unterschied zu Beispiel 1a wurden 0,85 Teile Na-Dibutyldithiocarbamat eingesetzt und die unmodifizierte Harzsäure im Monomeren gelöst. Der Monomerumsatz betrug 65%. Die verwendete TETD-Menge betrug 1,2 Teile. Das Polymere wies eine Mooney-Viskosität (ML 1 + 4, 100°C) von 38 ME auf.

Beispiele 5

Die Herstellung erfolgte analog Beispiel 1a, während die Aktivierung wie in Beispiel 2 erfolgte. Im Unterschied zu Beispiel 1a wurden 3,25 Teile einer unmodifizierten Harzsäure auf Kiefernbalsambasis, eingesetzt. Ferner wurden 0,85 Teile Na-Dibutyldithiocarbamat eingesetzt. Der Monomerumsatz betrug 65%. Die verwendete TETD-Menge betrug 1,5 Teile. Das Polymere wies eine Mooney-Viskosität (ML 1 + 4, 100°C) von 36 ME auf.

Beispiel 6

Die Herstellung erfolgte analog Beispiel 1a, während die Aktivierung wie in Beispiel 2 erfolgte. Im Unterschied zu Beispiel 1a wurden 1,95 Teile unmodifizierte Harzsäure auf Tallölbasis und 1,30 Teile disproportionierte Harzsäure sowie 0,85 Teile Na-Dibutyldithiocarbamat eingesetzt. Der Monomerumsatz betrug 66%. Die verwendete TETD-Menge betrug 1,5 Teile. Das Polymere wies eine Mooney-Viskosität (ML 1 + 4, 100°C) von 39 ME auf.

Beispiel 7

Die Herstellung erfolgte analog Beispiel 1a, während die Aktivierung wie in Beispiel 2 erfolgte. Im Unterschied zu Beispiel 1a wurden 1,63 Teile unmodifizierte Harzsäure auf Tallölbasis und 1,63 Teile disproportionierte Harzsäure sowie 0,85 Teile Na-Dibutyldithiocarbamat eingesetzt. Der Monomerumsatz betrug 65%. Die verwendete TETD-Menge betrug 1,5 Teile. Das Polymere wies eine Mooney-Viskosität (ML 1 + 4, 100°C) von 36 ME auf.

Beispiel 8

Die Herstellung erfolgte analog Beispiel 1a, während die Aktivierung wie in Beispiel 2 erfolgte. Im Unterschied zu Beispiel 1a wurden 3,25 Teile Abietinsäure und 0,85 Teile Na-Dibutyldithiocarbamat eingesetzt. Der Monomerumsatz betrug 65%. Die verwendete TETD-Menge betrug 1,5 Teile. Das Polymere wies eine Mooney-Viskosität (ML 1 + 4, 100°C) von 40 ME auf.

Beispiel 9

Die Herstellung erfolgte analog Beispiel 1a, während die Aktivierung wie in Beispiel 2 erfolgte. Im Unterschied zu Beispiel 1a wurden 3,25 Teile einer unmodifizierten Harzsäure auf Tallölbasis, im Monomeren gelöst,

eingesetzt. Ferner wurden 0,80 Teile Na-Dibutyldithiocarbamat eingesetzt. Der Monomerumsatz betrug 68%. Die verwendete TETD-Menge betrug 1,5 Teile. Das Polymere wies eine Mooney-Viskosität (ML 1 + 4, 100°C) von 45 ME auf.

Beispiel 10

Die Herstellung erfolgte analog Beispiel 1a, während die Aktivierung wie in Beispiel 2 erfolgte. Im Unterschied zu Beispiel 1a wurden 3,25 Teile Abietinsäure eingesetzt. Ferner wurden 0,80 Teile Na-Dibutyldithiocarbamat eingesetzt. Der Monomerumsatz betrug 65%. Die verwendete TETD-Menge betrug 1,2 Teile. Das Polymere wies eine Mooney-Viskosität (ML 1 + 4, 100°C) von 42 ME auf.

**Tabelle 2:** Herstellbedingungen und Viskositäten für die Beispiele 2 - 10

| | unmodifizierte Harzsäuren auf Basis von | Na-Dibutyl-dithiocarbamat [Teile] | Monomer CP [Teile] | Monomer DCB [Teile] | Temp. [°C] | $K_2S_2O_8$ [Teile] | Monomer-umsatz [%] | TETD-Nachsatz [Teile] | ML 1+4 [ME] |
|---|---|---|---|---|---|---|---|---|---|
| Bsp. 2 | Tallöl | 0,85 | 100 | - | 40 | 0,15 | 64 | 1,2 | 42 |
| Bsp. 3 | Tallöl | 0,85 | 90 | 10 | 25 | 0,20 | 67 | 1,5 | 41 |
| Bsp. 4 | Wurzelharz | 0,85 | 100 | - | 40 | 0,46 | 65 | 1,2 | 38 |
| Bsp. 5 | Kiefernbalsam | 0,85 | 100 | - | 40 | 0,13 | 65 | 1,5 | 36 |
| Bsp. 6 | Tallöl[1)] | 0,85 | 100 | - | 40 | 0,19 | 66 | 1,5 | 39 |
| Bsp. 7 | Tallöl[2)] | 0,85 | 100 | - | 40 | 0,21 | 65 | 1,5 | 36 |
| Bsp. 8 | Abietinsäure | 0,85 | 100 | - | 40 | 0,23 | 65 | 1,5 | 40 |
| Bsp. 9 | Tallöl | 0,80 | 100 | - | 40 | 0,25 | 68 | 1,5 | 45 |
| Bsp.10 | Abietinsäure | 0,80 | 100 | - | 40 | 0,26 | 65 | 1,2 | 42 |

1) Gemisch unmodifizierter Harzsäure:disproportionierter Harzsäure = 60:40

2) Gemisch unmodifizierter Harzsäure:disproportionierter Harzsäure = 50:50

Vergleichsbeispiel 1

Gemäß DE-OS 2755074, Polymerisat 3, wurde mit einer unmodifizierten Harzsäure auf Wurzelharzbasis ein Polychloropren hergestellt. Der Polymerisationsumsatz betrug 68% und die Peptisation wurde im Anschluß an die Polymerisation durchgeführt. Die Mooney-Viskosität ML 1 + 4 (100°C) des Polymerisats betrug 41 ME.

Vergleichsbeispiel 2

Gemäß DE-OS 3507825, Serie 8, Beispiel D, wurde bei der Polymerisation disproportionierte Harzsäure eingesetzt. Die Peptisation erfolgte während der Polymerisation. Aus Gründen der Vergleichbarkeit mit dem erfindungsgemäß hergestellten Polymerisat, Beispiel 2, wurde bei dem Vergleichsbeispiel 2 kein Dichlorbutadien verwendet. Der Polymerisationsumsatz betrug 65% und die Mooney-Viskosität des Polymerisats wurde zu ML 1 + 4 (100°C) 43 ME bestimmt.

Vergleichsbeispiel 3

Man arbeitete analog Vergleichsbeispiel 1 mit dem Unterschied, daß disproportionierte Harzsäure eingesetzt wurde. Der Umsatz betrug 64% und die Mooney-Viskosität ML 1 + 4 (100°C) 40 ME.

Vergleichsbeispiel 4

Man arbeitete analog Vergleichsbeispiel 1 mit dem Unterschied, daß disproportionierte Harzsäure eingesetzt wurde. Der Umsatz betrug 67% und die Mooney-Viskosität ML 1 + 4 (100°C) 45 ME.

Vergleichsbeispiel 5

Man arbeitete analog Vergleichsbeispiel 1. Der Polymerisationsumsatz betrug 67% und die Mooney-Viskosität ML 1 + 4 (100°C) 43 ME.

Am erhaltenen Rohkautschuk wurden die Mooney-Viskosität (ML 1 + 4) nach DIN 53 523, Teil 1-3, bei 100°C und die Viskositätszahl $V_{10}$ sowie die Elastizitätszahl $DE_{30}$ gemessen (s. Tabelle 3).

Die Ermittlung und Bedeutung von $V_{10}$ und $DE_{30}$ sind in Kautschuk, Gummi und Kunststoffe 36 (1983) Nr. 2 in dem Artikel von R. Koopmann (Verfahren zur genauen und umfassenden rheologischen Materialcharakterisierung) ausführlich erklärt.

<u>Tabelle 3:</u> Eigenschaften der erfindungsgemäß hergestellten Polymeren der Beispiele 2 bis 10 im Vergleich zum Stand der Technik

| Polymer | ML 1+4 | $V_{10}$ | $DE_{30}$ | $\frac{DE_{30}}{V_{10}}$ |
|---|---|---|---|---|
| | [ME] | [Ns] | ($^1/_{10}$ mm] | [$^1/_{10}$ mm.$Ns^{-1}$] |
| Beispiel 2 | 42 | 47,8 | 18,8 | 0,393 |
| Beispiel 3 | 41 | 43,5 | 15,5 | 0,356 |
| Beispiel 4 | 38 | 42,4 | 16,5 | 0,389 |
| Beispiel 5 | 36 | 34,0 | 15,9 | 0,468 |
| Beispiel 6 | 39 | 43,8 | 16,2 | 0,370 |
| Beispiel 7 | 36 | 36,0 | 15,8 | 0,438 |
| Beispiel 8 | 40 | 44,5 | 16,3 | 0,366 |
| Beispiel 9 | 45 | 56,0 | 19,6 | 0,350 |
| Beispiel 10 | 42 | 61,2 | 21,5 | 0,351 |
| Vergleichsbeispiel 1 | 41 | 41,2 | 26,7 | 0,648 |
| Vergleichsbeispiel 2 | 43 | 43,3 | 24,2 | 0,559 |
| Vergleichsbeispiel 3 | 40 | 44,0 | 25,9 | 0,589 |
| Vergleichsbeispiel 4 | 45 | 51,7 | 27,3 | 0,522 |
| Vergleichsbeispiel 5 | 43 | 54,0 | 28,2 | 0,522 |

Die Beispiele 2 bis 10 zeigen, daß die erfindungsgemäß hergestellten Polymeren verbesserte Eigenschaften gegenüber dem Stand der Technik (Vergleichsbeispiele 1 bis 5) aufweisen. Dies drückt sich im Quotienten Elastizität $DE_{30}$ zur Viskositätszahl $V_{10}$ aus.

Ein Vergleich der einzelnen Daten zeigt insbesondere folgenden überraschenden Zusammenhang :

1) Beim Übergang von Vergleich 3 (modifizierte Harzsäure, Nachpeptisation) zu Vergleich 1 (unmodifizierte Harzsäure, Nachpeptisation) ergibt sich eine Verschlechterung des Wertes

$$\frac{DE_{30}}{V_{10}}$$

(je höher, desto schlechter der Wert).

2) Beim Übergang von Vergleich 3 (modifizierte Harzsäure, Nachpeptisation) zu Vergleich 2 (modifizierte Harzsäure, Direktpeptisation) ergibt sich eine geringfügige Verbesserung des Wertes

$$\frac{DE_{30}}{V_{10}}$$

3) Aus 1) und 2) folgt, daß der Übergang von Nachpeptisation/modifizierter Harzsäure zu Direktpeptisation/unmodifizierter Harzsäure einen mehr als additiven, d.h. synergistischen, Effekt betreffend den Quotienten $DE_{30}/V_{10}$ mit sich bringt : Eine reine Addition würde demnach nämlich zu einer Verschlechterung führung.

Wie Tabelle 3 jedoch zeigt, sind die erfindungsgemäßen Beispiele den Vergleichsbeispielen hinsichtlich $DE_{30}/V_{10}$ weit überlegen.

## Patentansprüche

1. Verfahren zur Herstellung von toluollöslichem vulkanisierbarem Polychloropren durch Emulsionspolymerisation von Chloropren und, bezogen auf eingesetztes polymerisierbares Monomer, 0 bis 30 Gew.-% mit Chloropren copolymerisierbaren ethylenisch ungesättigten anderen Monomeren in Gegenwart von unmodifizierter Harzsäure und in Gegenwart von 0,05 bis 1,5 Gew.-%, bezogen auf eingesetztes polymerisierbares Monomer, elementarem Schwefel oder der äquivalenten Menge Schwefelspender nach der Variante der Direktpeptisation, dadurch gekennzeichnet, daß man die Polymerisation im alkalischen Medium in Gegenwart von

(1) — jeweils bezogen auf 100 g eingesetztes polymerisierbares Monomer — als Peptisationsmittel

(1a) $2 \cdot 10^{-4}$ bis $4.4 \cdot 10^{-2}$ Mol Dithiocarbamat mit dem Anion

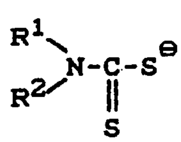 und/oder

(1b) $3 \cdot 10^{-4}$ bis $6.2 \cdot 10^{-2}$ Mol Xanthogenat mit dem Anion

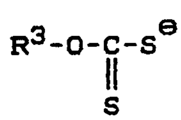

worin

$R^1$, $R^2$, $R^3$ $C_1$-$C_{24}$-Alkyl, $C_5$-$C_{16}$-Cycloalkyl oder $C_5$-$C_{18}$-Aryl, die bis zu 3 Heteroatome enthalten können, und darüber hinaus

$R^1$ und $R^2$ zusammen $C_4$-$C_5$-Alkylen bedeuten,

und

(2) wasserlöslichem Salz von tricyclischer Diterpencarbonsäure mit mindestens zwei konjugierten C=C-Doppelbindungen pro Molekül in einer Menge entsprechend $10^{-3}$ bis $10^{-1}$ C=C-Doppelbindungen pro 100 g eingesetztem polymerisierbarem Monomer durchführt.

2. Verfahren nach Anspruch 1, wonach neben Chloropren bis zu 20 Gew.-% andere copolymerisierbare Monomere eingesetzt werden.

3. Verfahren nach Ansprüchen 1 und 2, wonach in Gegenwart von 0,1 bis 1 Gew.-% elementarem Schwefel oder der äquivalenten Menge Schwefelspender gearbeitet wird.

4. Verfahren nach Ansprüchen 1 bis 3, wonach man in Gegenwart von $4 \cdot 10^{-4}$ bis $2 \cdot 10^{-2}$ Mol Dithiocarbamat (1a) arbeitet.

5. Verfahren nach Ansprüchen 1 bis 3, wonach man in Gegenwart von $6 \cdot 10^{-4}$ bis $3 \cdot 10^{-2}$ Mol Xanthogenat (1b) arbeitet.

6. Verfahren nach Ansprüchen 1 bis 5, wonach man in Gegenwart einer Menge Salz (2) entsprechend $6 \cdot 10^{-3}$ bis $6 \cdot 10^{-2}$ C=C-Doppelbindungen pro 100 g eingesetztem polymerisierbarem Monomer arbeitet.

**Claims**

1. A process for the production of toluene-soluble, vulcanizable polychloroprene by emulsion polymerization of chloroprene and, based on polymerizable monomer used, 0 to 30% by weight of ethylenically unsaturated, other monomers copolymerizable with chloroprene in the presence of unmodified resinic acid and in the presence of 0.05 to 1.5% by weight, based on polymerizable monomer used, of elemental sulfur or the equivalent quantity of sulfur donor by the variant of direct peptization,
characterized in that the polymerization is carried out in alkaline medium in the presence of

(1) — based in each case on 100 g polymerizable monomer used — as peptizing agent

(1a) $2 \cdot 10^{-4}$ to $4.4 \cdot 10^{-2}$ mol dithiocarbamate containing the anion

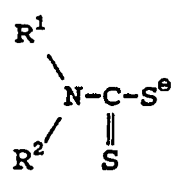

and/or

(1b) $3 \cdot 10^{-4}$ to $6.4 \cdot 10^{-2}$ mol xanthogenate containing the anion

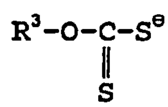

in which
$R^1$, $R^2$ and $R^3$ represent $C_1$-$C_{24}$ alkyl, $C_5$-$C_{16}$ cycloalkyl or $C_6$-$C_{18}$ aryl which may contain up to three heteroatoms, in addition to which
$R^1$ and $R^2$ together represent $C_4$-$C_6$ alkylene, and

(2) a water-soluble salt of tricyclic diterpene carboxylic acid containing at least two conjugated C=C double bonds per molecule in a quantity corresponding to $10^{-3}$ to $10^{-1}$ C=C double bonds per 100 g polymerizable monomer used.

2. A process as claimed in claim 1, in which up to 20% by weight of the copolymerizable monomers are used in addition to chloroprene.

3. A process as claimed in claims 1 and 2, characterized in that it is carried out in the presence of 0.1 to 1% by weight elemental sulfur or the equivalent quantity of sulfur donor.

4. A process as claimed in claims 1 to 3, characterized in that it is carried out in the presence of $4 \cdot 10^{-4}$ to $2 \cdot 10^{-2}$ mol dithiocarbamate (1a).

5. A process as claimed in claims 1 to 3, characterized in that it is carried out in the presence of $6 \cdot 10^{-4}$ to $3 \cdot 10^{-2}$ mol xanthogenate (1b).

6. A process as claimed in claims 1 to 5, characterized in that it is carried out in the presence of a quantity of salt (2) corresponding to $6 \cdot 10^{-3}$ to $6 \cdot 10^{-2}$ C=C double bonds per 100 g polymerizable monomer used.

## Revendications

1. Procédé de préparation d'un polychloroprène vulcanisable, soluble dans le toluène, par polymérisation en émulsion du chloroprène et de, par rapport au monomère polymérisable mis en oeuvre, 0 à 30% en poids d'autres monomères à insaturation éthylénique copolymérisables avec le chloroprène, en présence d'un acide résinique non modifié et en présence de 0,05 à 1,5% en poids, par rapport au monomère polymérisable mis en oeuvre, de soufre élémentaire ou de la quantité équivalente d'un réactif fournisseur de soufre, par la variante de la peptisation directe, caractérisé en ce que l'on effectue la polymérisation en milieu alcalin en présence de :

(1) — dans chaque cas pour 100 g du monomère polymérisable mis en oeuvre —

(1a) $2 \times 10^{-4}$ à $4,4 \times 10^{-2}$ mol d'un dithiocarbamate ayant l'anion

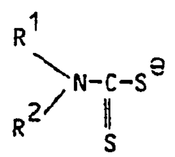

et/ou

(1b) $3 \times 10^{-4}$ à $6,2 \times 10^{-2}$ mol d'un xanthogénate ayant l'anion

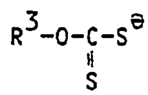

dans lesquels

$R^1$, $R^2$, $R^3$ représentent des groupes alkyle en $C_1$-$C_{24}$, cycloalkyle en $C_5$-$C_{16}$ ou aryle en $C_5$-$C_{18}$, qui peuvent contenir jusqu'à 3 hétéroatomes, ou bien

$R^1$ et $R^2$ forment ensemble un groupe alkylène en $C_4$-$C_5$, en tant qu'agents peptisants, et

(2) un sel soluble dans l'eau d'un acide diterpènecarboxylique tricyclique à au moins deux doubles liaisons C=C conjuguées par molécule, en quantité correspondant à $10^{-3}$ à $10^{-1}$ double liaison C=C pour 100 g de monomère polymérisable mis en oeuvre.

2. Procédé selon la revendication 1, caractérisé en ce que l'on utilise, avec le chloroprène, jusqu'à 20% en poids d'autres monomères copolymérisables.

3. Procédé selon les revendications 1 et 2, selon lequel on opère en présence de 0,1 à 1% en poids de soufre élémentaire ou de la quantité équivalente d'un réactif fournisseur de soufre.

4. Procédé selon les revendications 1 à 3, dans lequel on opère en présence de $4 \times 10^{-4}$ à $2 \times 10^{-2}$ mol de dithiocarbamate (1a).

5. Procédé selon les revendications 1 à 3, dans lequel on opère en présence de $6 \cdot 10^{-4}$ à $3 \times 10^{-2}$ mol de xanthogénate (1b).

6. Procédé selon les revendications 1 à 5, dans lequel on opère en présence du sel (2) en quantité correspondant à $6 \times 10^{-3}$ à $6 \times 10^{-2}$ double liaison C=C pour 100 g de monomère polymérisable mis en oeuvre.